# EUROPEAN PATENT SPECIFICATION

(11) **EP 3 025 881 B1**
(45) Date of publication and mention of the grant of the patent: **27.12.2017**
(21) Application number: 14830075.9
(22) Date of filing: 17.06.2014
(51) Int. Cl.: B60C 17/00, B60C 13/00, B60C 3/04, B60C 15/00

(54) **RUN-FLAT TIRE**
NOTLAUFREIFEN
PNEU À FLANCS RENFORCÉS

(30) Priority: 22.07.2013 JP 2013152082
(43) Date of publication of application: 01.06.2016
(73) Proprietor: Bridgestone Corporation, Tokyo 104-8340 (JP)
(72) Inventor: KAWASHIMA, Takuto, Tokyo 104-8340 (JP); KAWAKAMI, Shinichiro, Tokyo 104-8340 (JP)
(74) Representative: Oxley, Robin John George
(86) International application number: PCT/JP2014/066074
(87) International publication number: WO 2015/012026

(56) References cited:
- WO-A1-2013/054757
- JP-A- 2009 101 775
- JP-A- 2013 079 064

## Description

### Technical Field

The present invention relates to a run-flat tire.

### Background Art

Japanese Patent Application Laid-Open (JP-A) No. 2011-184000 describes a side-reinforcing type run-flat tire including side reinforcing rubber with a crescent shaped cross-section at a side wall portion thereof. Attention is also drawn to the disclosure of the preamble of the tire of claim 1 shown in WO2013/054757A.

### SUMMARY OF INVENTION

### Technical Problem

In the conventional side-reinforcing type run-flat tire described above, run-flat performance when punctured is obtained by the side reinforcing rubber.

However, since the side reinforcing rubber is extremely hard, it has been difficult to improve ride quality performance when travelling normally.

In consideration of the above circumstances, an object of the present invention is to improve ride quality performance when travelling normally, while maintaining run-flat performance.

### Solution to Problem

A run-flat tire according to a first aspect of the present invention is as claimed in claim 1.

Note that, when Gs/Gt6 > 0.35, the overall thickness of the side wall portion becomes thicker and there is less of a reduction in vertical spring, such that there is less of an improvement in ride quality performance when travelling normally.

In this run-flat tire, the proportion of the thickness Gs of the side layer occupying the overall thickness Gt6 at the position of the maximum width CW of the main body portion of the carcass in the tire width direction is set as appropriate. This enables the vertical spring of the tire (the spring coefficient in the tire radial direction) to be reduced, and the ride quality performance to be improved when travelling normally, while maintaining run-flat performance.

A second aspect is the run-flat tire according to the first aspect, wherein CW/SW = from 0.95 to 0.99 is satisfied, wherein SW is a tire cross-section width.

When CW/SW < 0.95, the Gs of the side layer is excessively thick, and there is less of an improvement in ride quality when travelling normally. When CW/SW > 0.99, it becomes difficult to dispose the side layer at the side wall portion.

In this run-flat tire, the proportion of the maximum width CW of the main body portion of the carcass with respect to the tire cross-section width SW is set as appropriate, so as to achieve an appropriate thickness of the side layer. Thus vertical spring is reduced, ride quality performance is improved, and the heat dissipation ability from the side wall portion while running flat is increased, enabling run-flat durability to be secured.

A third aspect is the run-flat tire according to the first aspect or the second aspect, wherein CW/TW = from 1.07 to 1.11 is satisfied, wherein TW is a tread width of the tread.

Note that when CW/TW < 1.07, the range of the side reinforcing layer in the tire width direction is narrower, and the hardness of the side reinforcing layer is more liable to influence ride quality performance. When CW/TW > 1.11, it becomes harder to dispose the side layer at the side wall portion.

In this run-flat tire, the proportion of the maximum width CW of the main body portion of the carcass with respect to the tread width TW is set as appropriate, such that the region of the side reinforcing layer in the tire width direction is wider than hitherto. The side reinforcing layer is thereby suppressed from becoming one-sided, and ride quality performance can be improved, even when the same member is employed as the side reinforcing layer as hitherto.

### Advantageous Effects of Invention

The run-flat tire according to the present invention obtains excellent advantageous effects of enabling ride quality performance to be greatly improved when travelling normally, while maintaining run-flat performance.

### BRIEF DESCRIPTION OF DRAWINGS

Fig. 1 is a cross-section view illustrating one tire equatorial plane side half of a run-flat tire, in which a carcass has an envelope structure, according to a first exemplary embodiment, sectioned to include the tire axis.
Fig. 2 is a cross-section view illustrating one tire equatorial plane side half of a run-flat tire, in which a carcass does not have an envelope structure, according to a second exemplary embodiment, sectioned to include the tire axis.
Fig. 3 is a cross-section view illustrating one tire equatorial plane side half of a run-flat tire according to a comparative example.

### DESCRIPTION OF EMBODIMENTS

Explanation follows regarding exemplary embodiments of the present invention, based on the drawings.

### First Exemplary Embodiment

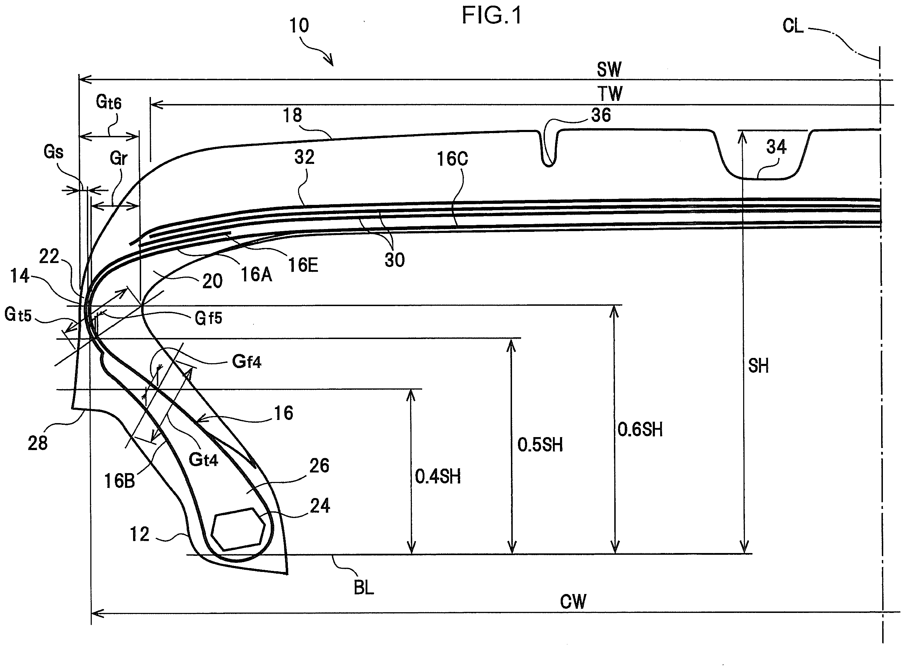

In Fig. 1, a run-flat tire 10 according to an exemplary embodiment includes a pair of bead portions 12, side wall portions 14, a carcass 16, a tread 18, side reinforcing layers 20, and side rubber 22 serving as an example of a side layer. Note that each of the drawings is a cross-section illustrating half of the run-flat tire 10 on one tire width direction side of a tire equatorial plane CL. Note that the tire width direction refers to a direction parallel to the tire axial direction. The tire equatorial plane CL refers to a planar face that passes through the center of the tire width direction parallel to the tire axis, that is perpendicular to the tire axis, and that is a large circle which intersects the surface of the tread 18.

The pair of bead portions 12 are locations that are fitted together with a rim (not illustrated in the drawings), and that are each embedded with a bead core 24 in an annular shape about the tire axis. Bead filler 26 is provided between the bead core 24, and a main body portion 16A and a folded-back portion 16B of the carcass 16, described later. The bead filler 26 is configured of rubber that is harder than the rubber configuring the surface of the bead portion 12, as well as the side rubber 22. Note that one out of the pair of bead portions 12 is illustrated in each of the drawings.

The side wall portions 14 are locations that are connected to the tire radial direction outer side of the respective bead portions 12.

The carcass 16 straddles between the pair of bead portions 12, and includes the main body portion 16A positioned between the bead cores 24, and the folded-back portions 16B that are folded back from an inner side toward an outer side about the respective bead cores 24. In Fig. 1, an end portion 16E of each folded-back portion 16B extends as far as a position sandwiched between belt layers 30, described later, and the main body portion 16A. Namely, the carcass 16 has what is referred to as an envelope structure.

CW/SW = from 0.95 to 099, where SW is the tire cross-section width. Note that the tire cross-section width SW refers to "cross-section width" as defined by the Japan Automobile Tire Manufacturers Association (JATMA) YEAR BOOR 2012, and does not include a rim guard 28 or decoration (not illustrated in the drawings) provided to an outer face of each side wall portion 14. In cases in which the location of use or manufacturing location applies TRA standards or ETRTO standards, then the respective standards are adhered to. The maximum width CW of the main body portion 16A is a distance in the tire width direction between respective outer faces of the main body portion 16A that are disposed furthest toward the tire width direction outer sides. The position of the maximum width CW in the tire radial direction is at a position 0.6SH from a rim baseline BL of the bead portions 12 toward the tire radial direction outer side, for example, where SH is a tire cross-section height.

When CW/SW < 0.95, a thickness Gs of the side rubber 22 is excessively thick, and there is less of an improvement in ride quality when travelling normally. When CW/SW > 0.99, it becomes difficult to dispose the side rubber 22 at the side wall portions 14.

Moreover, CW/TW = from 1.07 to 1.11, where TW is the tread width of the tread 18. Note that the tread width TW refers to "tread width" as determined by the JATMA YEAR BOOK 2012.

When CW/TW < 1.07, the tire width direction range of the side reinforcing layers 20 becomes narrow, and the hardness of the side reinforcing layers 20 is liable to effect ride quality performance. When CW/TW > 1.11, it becomes difficult to dispose the side rubber 22 at the side wall portions 14.

Note that ranges of the maximum width CW of the main body portion 16A have been described with the tire cross-section width SW as a reference, and also with the tread width TW as a reference; however, these ranges are not contradictory to each other. It is sufficient that the tire width direction position of the maximum width CW is positioned between the position of the tread width TW (tread ends) and the position of the tire cross-section width SW (maximum tire width position).

The belt layers 30 and a reinforcing layer 32 are provided at the tire radial direction outer side of the main body portion 16A. The belt layers 30 are configured, for example, by two layers of ply formed by covering plural steel cords (not illustrated in the drawings) with rubber. The reinforcing layer 32 is provided at the tire radial direction outer side of the belt layers 30. The reinforcing layer 32 is configured, for example, by a ply formed by covering organic fibers with rubber, configured with a wider width than the belt layers 30, and covers the belt layers 30.

The tread 18 is provided at the tire radial direction outer side of the main body portion 16A, and is specifically provided at the tire radial direction outer side of the belt layers 30 and the reinforcing layer 32. The tread 18 is connected to the tire radial direction outer side of the respective side wall portions 14 on either side thereof. Circumferential direction main grooves 34, 36, lateral main grooves (not illustrated in the drawings), and the like are formed as appropriate on the surface of the tread 18.

Each side reinforcing layer 20 is disposed at the tire width direction inner side of the main body portion 16A of the carcass 16, and is configured to gradually reduce in thickness on progression toward a crown portion 16C of the carcass 16, and toward the bead portion 12, respectively. The side reinforcing layer 20 is configured by rubber that has the same properties as the bead filler 26.

Specifically, in cross-section along the tire width direction, the side reinforcing layer 20 is formed with a crescent shaped cross-section that is thickest at the position of the maximum width CW of the carcass 16. An end portion of the side reinforcing layer 20 at the crown portion 16C side of the carcass 16 extends as far as a position superimposed on the belt layers 30 in the tire radial direction with the crown portion 16C interposed therebetween. An end portion of the side reinforcing layer 20 at the bead portion 12 side extends, for example, as far as the vicinity of the bead core 24. Note that the positions of either end portion of the side reinforcing layer 20 are not limited thereto.

The side rubber 22 is disposed at the tire outer side of the main body portion 16A at each side wall portion 14, configures a tire outer side face, and has the thickness Gs that is thinner than a thickness Gr of the side reinforcing layer 20 at the position of the maximum width CW of the main body portion 16A in the tire width direction.

The thickness Gs of the side rubber 22 is Gs/Gt6 ≤ 0.35, where Gt6 is an overall thickness of the side wall portion 14 at the position of the maximum width CW of the main body portion 16A. When Gs/Gt6 > 0.35, the overall thickness Gt6 of the side wall portion 14 becomes thicker and there is less of a reduction in vertical spring (spring coefficient in the tire radial direction), such that there is less of an improvement in ride quality when travelling normally. Note that, from the perspective of tire manufacturability, the minimum value of Gs/Gt6 is approximately 0.5.

The respective thicknesses are measured along a direction normal to the outer face of the main body portion 16A in cross-section along the tire width direction of the carcass 16. The thickness Gs has the outer face of the main body portion 16A as a reference, regardless of whether the main body portion 16A and the folded-back portion 16B are superimposed on each other or not.

Thus, as illustrated in Fig. 1, in cases in which the folded-back portion 16B is superimposed on the main body portion 16A at the position of the maximum width CW of the main body portion 16A, the thickness Gs is the sum of the thickness of the side rubber 22 and the thickness of the folded-back portion 16B.

Relationships between the thickness of the bead filler 26 and the overall thickness of the side wall portion 14 further to the tire radial direction inner side than the position of the maximum width CW of the main body portion 16A are, for example, as follows. Gf5/Gt5 ≤ 0.1, where Gf5 is the thickness of the bead filler 26, and Gt5 is the overall thickness of the side wall portion 14, at a position 0.5SH toward the tire radial direction outer side from the rim baseline BL. Moreover, 0.2 ≤ Gf4/Gt4 ≤ 0.3, where Gf4 is the thickness of the bead filler 26, and Gt4 is the overall thickness of the side wall portion 14, at a position 0.4SH toward the tire radial direction outer side from the rim baseline BL.

When the respective thicknesses of the bead filler 26 exceed the respective upper limits, there is less of a reduction in vertical spring, such that there is less of an improvement in ride quality performance when travelling normally. When Gf4/Gt4 is less than 0.2Gt4, it becomes difficult to secure run-flat performance. The value of the thickness Gf5 of the bead filler 26 may be 0.

### Effects

Explanation follows regarding effects of the present exemplary embodiment configured as described above. In the run-flat tire 10 according to the present exemplary embodiment in Fig. 1, the thickness Gs of the side rubber 22 is set thinner than the thickness Gr of each side reinforcing layer 20 at the position of the maximum width CW of the main body portion 16A of the carcass 16 in the vehicle width direction, such that the overall thickness Gt6 is much thinner than in conventional structures. This enables vertical spring of the tire to be reduced and ride quality performance when travelling normally to be improved, while securing the thickness Gr of the side reinforcing layer 20 and maintaining run-flat performance.

The proportion of the thickness Gs of the side rubber 22 included in the overall thickness Gt6 at the position of the maximum width CW of the main body portion 16A of the carcass 16 in the vehicle width direction is set as appropriate, thereby enabling ride quality performance when travelling normally to be greatly improved, while maintaining run-flat performance.

In the present exemplary embodiment, the proportion of the maximum width CW of the main body portion 16A of the carcass 16 with respect to the tire cross-section width SW is set as appropriate, so as to achieve an appropriate thickness of the side rubber 22. Thus vertical spring is reduced, ride quality performance is improved, and the heat dissipation ability from the side wall portions 14 while running flat is increased, enabling run-flat durability to be secured.

The proportion of the maximum width CW of the main body portion 16A of the carcass 16 with respect to the tread width TW is set as appropriate, such that the region of the side reinforcing layers 20 in the tire width direction is wider than hitherto. This enables the side reinforcing layers 20 to be suppressed from becoming one-sided, and ride quality performance to be improved, even when the same member is employed as the side reinforcing layers 20 as hitherto.

### Second Exemplary Embodiment

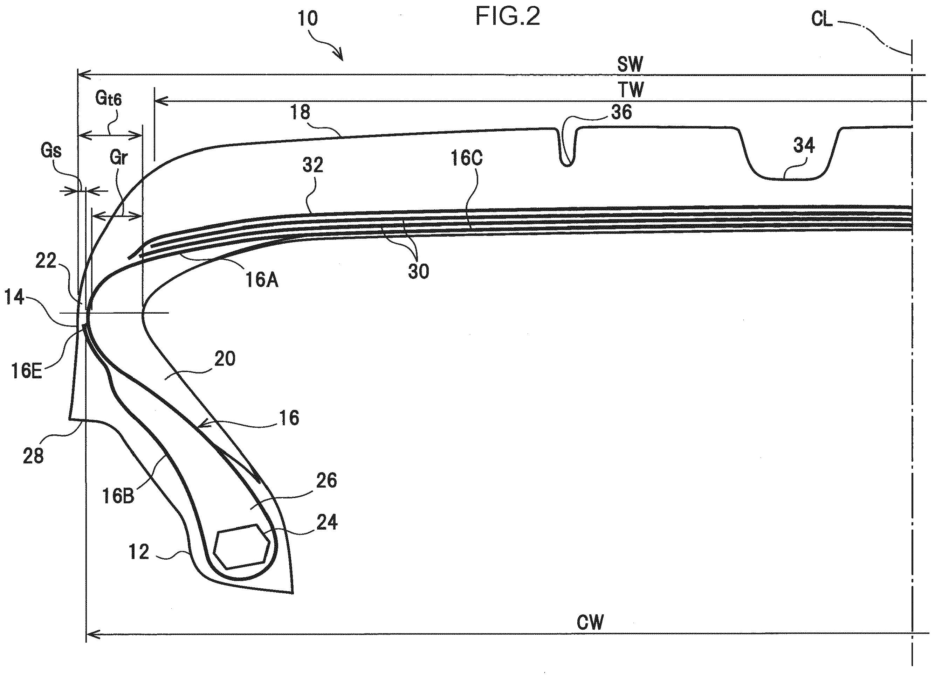

In a run-flat tire 10 according to an exemplary embodiment in Fig. 2, the structure of the carcass 16 is not an envelope structure, and the end portion 16E of each folded-back portion 16B is disposed at a position that is not superimposed on the belt layers 30. For example, the end portion 16E of the folded-back portion 16B is disposed further toward the tire radial direction inner side than the position of the maximum width CW of the main body portion 16A.

In the present exemplary embodiment, the folded-back portion 16B is not superimposed on the main body portion 16A at the position of the maximum width CW of the main body portion 16A, such that the thickness Gs is the thickness of the side rubber 22 itself.

Other portions are similar to those in the first exemplary embodiment, and so the same portions are appended with the same reference numerals, and explanation thereof is omitted.

### Other Exemplary Embodiments

In the above exemplary embodiments, the side rubber 22 has been given as an example of a side layer; however, the side layer is not limited to rubber, and may be a resin such as an elastomer.

The proportion of the thickness Gs of the side rubber 22 included in the overall thickness Gt6 at the position of the maximum width CW of the main body portion 16A of the carcass 16 in the tire width direction has been set at Gs/Gt6 ≤ 0.35.

The proportion of the maximum width CW of the main body portion 16A with respect to the tire cross-section width SW has been set at CW/SW = from 0.95 to 0.99; however, the proportion may be outside this number range.

The proportion of the maximum width CW of the main body portion 16A with respect to the tread width TW has been set as CW/TW = from 1.07 to 1.11; however, the proportion may be outside this number range.

### Test Examples

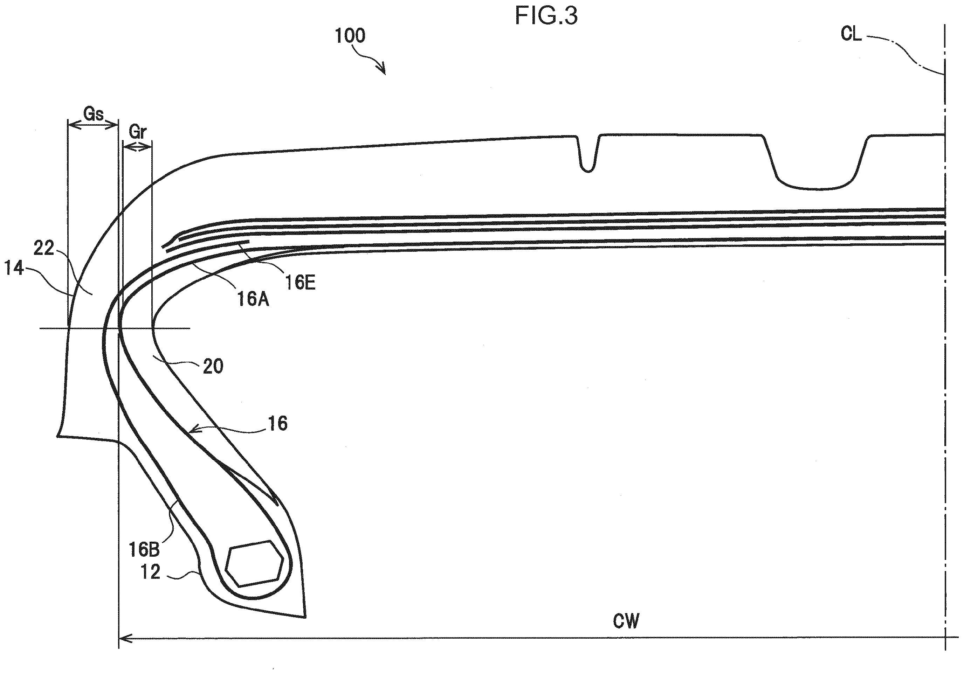

Tests of ride quality performance and run-flat performance were performed on the run-flat tire 10 according to an example (Fig. 1), and a run-flat tire 100 according to a comparative example (Fig. 3). The tire sizes are both 255/30R20. The rim used is 8.5J.

The internal pressure and load (radial load) applied to the tires during each test is as shown in Table 1. The thickness Gs of the side rubber and the thickness Gr of each side reinforcing layer are as shown in Table 2. Although the cross-section profile of the side reinforcing layer in each tire is slightly different in the comparative example and the example, the properties and the volume of rubber material employed in the side reinforcing layers are the same.

In the ride quality performance test, a drum test machine was employed, each tire was run on a drum provided with a protrusion at an outer circumferential face thereof, and vibration input when riding over the protrusion was measured. A smaller amplitude and quicker damping had a better evaluation. The values for ride quality performance in Table 2 are shown with 100 as a conventional value, with a smaller value indicating a better result.

For run-flat performance, running flat was performed employing a drum test machine, and the durability was evaluated by the distance traveled until a malfunction occurred in the tire. The values for run-flat performance in Table 2 are shown with 100 as a conventional value, with a larger value indicating a better result.

The test results are as shown in Table 2. The example shows better performance than the comparative example in terms of both ride quality performance and run-flat performance. This is thought to be an advantageous effect of making the thickness Gs of the side rubber thinner than the thickness Gr of the side reinforcing layer.

**Table 1**

| | Internal pressure (kPa) | Load (N) |
|---|---|---|
| Ride quality performance test | 330 | 5978 |
| Run-flat performance test | 0 | 4998 |

**Table 2**

| | Comparative example | Example |
|---|---|---|
| Thickness Gs of side rubber (mm) | 9 | 2 |
| Thickness Gr of each side reinforcing layer (mm) | 4 | 4 |
| Ride quality performance | 100 | 47 |
| Run-flat performance | 100 | 121 |

Tests were also performed regarding ride quality performance and run-flat performance in configurations in which the thickness Gs of the side rubber was made thinner than the thickness Gr of each side reinforcing layer similarly to in the example, and when the proportion of the thickness Gs of the side rubber with respect to the overall thickness Gt6 of the side wall portion at the position of the maximum width CW of the main body portion (Gs/Gt6), the proportion of the maximum width CW of the main body portion with respect to the tire cross-section width SW (CW/SW), and the proportion of the maximum width CW of the main body portion with respect to the tread width TW (CW/TW) were respectively changed.

Tests were also performed regarding ride quality performance and run-flat performance, when the proportion of the thickness of the bead filler with respect to the overall thickness of the side wall portion (Gf5/Gt5, Gf4/Gt4) was respectively changed at the position 0.5SH and at the position 0.4SH (where SH is the tire cross-section height) from the rim baseline BL toward the tire radial direction outer side.

The tests results are as shown in Table 3. The meaning of the values is similar to that in the above example. It could be confirmed that ride quality performance and run-flat performance are further improved in cases in which Gs/Gt6 ≤ 0.35, in cases in which 0.95 ≤ CW/SW ≤ 0.99, in cases in which 1.07 ≤ CW/TW ≤ 1.11, in cases in which Gf5/Gt5 ≤ 0.1, and in cases in which 0.2 ≤ Gf4/Gt4 ≤ 0.3.

**Table 3**

| | | Ride quality performance | Run-flat performance |
|---|---|---|---|
| Gs/Gt6 | 0.10 | 75 | 110 |
| | 0.20 | 65 | 115 |
| | 0.30 | 47 | 121 |
| | 0.35 | 70 | 115 |
| | 0.36 | 100 | 100 |
| | 0.37 | 102 | 98 |
| CW/SW | 0.93 | 100 | 100 |
| | 0.94 | 100 | 100 |
| | 0.95 | 65 | 116 |
| | 0.97 | 47 | 121 |
| | 0.99 | 70 | 116 |
| | 0.10 | 100 | 100 |
| | 0.11 | 102 | 98 |
| CW/TW | 1.05 | 102 | 99 |
| | 1.06 | 100 | 100 |
| | 1.07 | 65 | 116 |
| | 1.09 | 47 | 121 |
| | 1.11 | 70 | 116 |
| | 1.12 | 100 | 100 |
| | 1.13 | 102 | 98 |
| Gf5/Gt5 | 0 | 47 | 116 |
| | 0.1 | 70 | 121 |
| | 0.2 | 100 | 100 |
| | 0.3 | 102 | 98 |
| Gf4/Gt4 | 0 | 102 | 98 |
| | 0.1 | 100 | 100 |
| | 0.2 | 47 | 116 |
| | 0.3 | 70 | 121 |
| | 0.4 | 100 | 100 |
| | 0.5 | 102 | 98 |

### Explanation of the Reference Numerals

- 10: run-flat tire
- 12: bead portion
- 14: side wall portion
- 16: carcass
- 16A: main body portion
- 16B: folded-back portion
- 18: tread
- 20: side reinforcing layer
- 22: side rubber (side layer)
- 24: bead core
- CW: maximum width
- Gs: thickness
- Gt6: overall thickness
- SW: tire cross-section width
- TW: tread width

## Claims

1. A run-flat tire (10) comprising:
a pair of bead portions (12) that are each embedded with a bead core (24);
side wall portions (14) that are respectively connected to tire radial direction outer sides of the bead portions;
a carcass (16) that spans between the pair of bead portions and that includes a main body portion (16A) positioned between the bead cores, and a folded-back portion (16B) folded back from an inner side toward an outer side about the bead core;
a tread (18) that is provided at the tire radial direction outer side of the main body portion;
a side reinforcing layer (20) that is disposed at a tire width direction inner side of the main body portion and that is configured so as to respectively gradually decrease in thickness (Gf) toward a crown portion (16C) of the carcass and toward the bead portion;
a bead filler (26) provided between the bead core, and the main body portion and the folded-back portion of the carcass; and
a side layer (22) that is disposed in the side wall portion at the tire outer side of the main body portion, that configures a tire outer face, and that satisfies Gs/Gt6 ≤ 0.35, wherein Gs is a thickness of the side layer and Gt6 is an overall thickness of the side wall portion at a position of a maximum width CW of the main body portion in the tire width direction,
**characterized in that**:
Gf5/Gt5 ≤ 0.1, where Gf5 is the thickness of the bead filler, and Gt5 is the overall thickness of the side wall portion, at a position 0.5SH toward the tire radial direction outer side from the rim baseline BL; and **in that**:
0.2≤Gf4/Gt4≤0.3 is satisfied, where SH is a tire cross-section height, Gf4 is the thickness of the bead filler, and Gt4 is the overall thickness of the side wall portion, at a position 0.4SH toward the tire radial direction outer side from the rim baseline BL, wherein the respective thicknesses are measured along a direction normal to the outer face of the main body portion (16A) in cross-section along the tire width direction of the carcass (16).

2. The run-flat tire of claim 1, wherein CW/SW = from 0.95 to 0.99 is satisfied, wherein SW is a tire cross-section width.

3. The run-flat tire of claim 1 or claim 2, wherein CW/TW = from 1.07 to 1.11 is satisfied, wherein TW is a tread width of the tread.

## Patentansprüche

1. Notlaufreifen (10), der Folgendes umfasst:
ein Paar von Wulstabschnitten (12), die jeweils mit einem Wulstkern (24) eingebettet sind,
Seitenwandabschnitte (14), die jeweils mit den in Reifenradialrichtung äußeren Seiten der Wulstabschnitte verbunden sind,
eine Karkasse (16), die sich zwischen dem Paar von Wulstabschnitten spannt und die einen Hauptkörperabschnitt (16A), der zwischen den Wulstabschnitten angeordnet ist, und einen umgeschlagenen Abschnitt (16B), der von einer inneren Seite zu einer äußeren Seite hin um den Wulstkern umgeschlagen ist, einschließt,
eine Lauffläche (18), die an der in Reifenradialrichtung äußeren Seite des Hauptkörperabschnitts bereitgestellt wird,
eine Seitenverstärkungslage (20), die an einer in Reifenbreitenrichtung inneren Seite des Hauptkörperabschnitts angeordnet ist und die so konfiguriert ist, dass sie zu einem Scheitelabschnitt (16C) der Karkasse hin und zu dem Wulstabschnitt hin jeweils allmählich in der Dicke (Gf) abnimmt,
einen Kernreiter (26), der zwischen dem Wulstkern und dem Hauptkörperabschnitt und dem umgeschlagenen Abschnitt der Karkasse bereitgestellt wird, und
eine Seitenlage (22), die in dem Seitenwandabschnitt auf der Reifenaußenseite des Hauptkörperabschnitts angeordnet ist, die eine Reifenaußenfläche konfiguriert und die Gs/Gt6 ≤ 0,35 erfüllt, wobei Gs eine Dicke der Seitenlage ist und Gt6 eine Gesamtdicke des Seitenwandabschnitts an einer Position einer maximalen Breite CW des Hauptkörperabschnitts in der Reifenbreitenrichtung ist,
**dadurch gekennzeichnet, dass**:
Gf5/Gt5 ≤ 0,1 erfüllt ist, wobei Gf5 die Dicke des Kernreiters ist und Gt5 die Gesamtdicke des Seitenwandabschnitts ist, an einer Position, 0,5 SH zu der in Reifenradialrichtung äußeren Seite hin von der Felgengrundlinie BL, und dadurch, dass:
0,2 ≤ Gf4/Gt4 ≤ 0,3 erfüllt ist, wobei SH eine Reifenquerschnittshöhe ist, Gf4 die Dicke des Kernreiters ist und Gt4 die Gesamtdicke des Seitenwandabschnitts ist, an einer Position, 0,4 SH zu der in Reifenradialrichtung äußeren Seite hin von der Felgengrundlinie BL, wobei die jeweiligen Dicken entlang einer Linie, senkrecht zu der Außenfläche des Hauptkörperabschnitts (16A) im Querschnitt entlang der Reifenbreitenrichtung der Karkasse (16), gemessen werden.

2. Notlaufreifen nach Anspruch 1, wobei CW/SW = von 0,95 bis 0,99 erfüllt ist, wobei SW eine Reifenquerschnittsbreite ist.

3. Notlaufreifen nach Anspruch 1 oder 2, wobei CW/TW = von 1,07 bis 1,11 erfüllt ist, wobei TW eine Laufflächenbreite der Lauffläche ist.

## Revendications

1. Pneumatique à affaissement limité (10) comprenant :
une paire de parties de talon (12) qui sont chacune intégrées avec une âme de talon (24) ;
des parties de paroi latérale (14) qui sont respectivement connectées à des côtés externes de direction radiale de pneumatique des parties de talon ;
une carcasse (16) qui s'étend de part et d'autre des parties de la paire de parties de talon et qui inclut une partie de corps principal (16A) qui est positionnée entre les âmes de talon, et une partie repliée (16B) qui est repliée depuis un côté interne en direction d'un côté externe autour de l'âme de talon ;
une bande de roulement (18) qui est prévue au niveau du côté externe de direction radiale de pneumatique de la partie de corps principal ;
une couche de renforcement latérale (20) qui est disposée au niveau d'un côté interne de direction de largeur de pneumatique de la partie de corps principal et qui est configurée de manière à respectivement diminuer de façon progressive en épaisseur (Gf) en direction d'une partie de couronne (16C) de la carcasse et en direction de la partie de talon ;
un agent de remplissage de talon (26) qui est prévu entre l'âme de talon, et la partie de corps principal et la partie repliée de la carcasse ; et
une couche latérale (22) qui est disposée dans la partie de paroi latérale au niveau du côté externe de pneumatique de la partie de corps principal, qui configure une face externe de pneumatique, et qui satisfait Gs/Gt6 ≤ 0,35, dans lequel Gs est une épaisseur de la couche latérale et Gt6 est une épaisseur globale de la partie de paroi latérale en une position d'une largeur maximum CW de la partie de corps principal dans la direction de largeur de pneumatique ;
**caractérisé en ce que** :
Gf5/Gt5 ≤ 0,1 est satisfait, où Gf5 est l'épaisseur de l'agent de remplissage de talon, et Gt5 est l'épaisseur globale de la partie de paroi latérale, en une position à 0,5 SH en direction du côté externe de direction radiale de pneumatique depuis la ligne de base de jante BL ; et **en ce que** :
0,2 ≤ Gf4/Gt4 ≤ 0,3 est satisfait, où SH est une hauteur de pneumatique en coupe transversale, Gf4 est l'épaisseur de l'agent de remplissage de talon, et Gt4 est l'épaisseur globale de la partie de paroi latérale, en une position à 0,4 SH en direction du côté externe de direction radiale de pneumatique depuis la ligne de base de jante BL, dans lequel les épaisseurs respectives sont mesurées suivant une direction qui est normale à la face externe de la partie de corps principal (16A) en coupe transversale suivant la direction de largeur de pneumatique de la carcasse (16).

2. Pneumatique à affaissement limité selon la revendication 1, dans lequel CW/SW = de 0,95 à 0,99 est satisfait, dans lequel SW est une largeur de pneumatique en coupe transversale.

3. Pneumatique à affaissement limité selon la revendication 1 ou la revendication 2, dans lequel CW/TW = de 1,07 à 1,11 est satisfait, dans lequel TW est une largeur de bande de roulement de la bande de roulement.
